# EUROPEAN PATENT SPECIFICATION

(11) **EP 2 233 277 B1**
(45) Date of publication and mention of the grant of the patent: **16.07.2014**
(21) Application number: 10156929.1
(22) Date of filing: 18.03.2010
(51) Int. Cl.: B29C 65/52, B05C 11/10, A41H 43/04, D06H 5/00

(54) **Cloth bonding apparatus**
Vorrichtung zum Verbinden von Stoff
Appareil de liaison de tissus

(30) Priority: 25.03.2009 JP 2009074797; 03.02.2010 JP 2010021798
(43) Date of publication of application: 29.09.2010
(73) Proprietor: Brother Kogyo Kabushiki Kaisha, Nagoya-shi, Aichi 467-8561 (JP)
(72) Inventor: Yoshimoto, Naoki, Nagoya-shi Aichi 467-8562 (JP); Tada, Satoru, Nagoya-shi Aichi 467-8562 (JP); Ohmura, Yoshikazu, Nagoya-shi Aichi 467-8562 (JP); Umeda, Kazutoshi, Nagoya-shi Aichi 467-8562 (JP); Iwakoshi, Hiroyasu, Nagoya-shi Aichi 467-8562 (JP); Yamaura, Hiroki, Nagoya-shi Aichi 467-8562 (JP); Enya, Tetsuji, Nagoya-shi Aichi 467-8562 (JP)
(74) Representative: Prüfer & Partner GbR European Patent Attorneys

(56) References cited:
- WO-A1-01/89812
- WO-A1-2006/132428
- WO-A2-2007/037865
- CH-A5- 655 894
- US-A- 2 142 733
- US-A- 2 317 446
- US-A- 2 664 938
- US-A- 3 295 493
- US-A1- 2003 010 439

## Description

### BACKGROUND

The present invention relates to a cloth bonding apparatus. More specifically, the present invention relates to a cloth bonding apparatus including a storage chamber that stores an adhesive therein.

A cloth bonding apparatus is directed for bonding cloths with an adhesive instead of sewing the cloths with a needle and a thread. By bonding the cloths with the adhesive, the cloth bonding apparatus can eliminate unevenness due to the thread that may be formed in the cloth surfaces when the cloths are sewn with the thread. The cloth surfaces processed by the cloth bonding apparatus are smooth. Thus, the cloth bonding apparatus is capable of manufacturing nice and soft clothes.

The cloth bonding apparatus discharges a liquid adhesive from a nozzle. The adhesive adheres onto a cloth. The worker then places another cloth on top of the cloth on which the adhesive has been applied. The cloth bonding apparatus presses the cloths in a pressurized manner. The cloth bonding apparatus bonds through this procedure.

With the apparatus described in Japanese Patent Application Laid-Open No. 2-265670, a storage chamber for storing a viscous fluid therein is provided. The apparatus applies a pressure into the storage chamber thereby to push the viscous fluid from the storage chamber. The apparatus supplies the viscous fluid pushed from the storage chamber to a nozzle and discharges the viscous fluid from the nozzle. The discharged viscous fluid adheres onto an adherend. The apparatus controls the pressure inside the storage chamber thereby to adjust the amount of viscous fluid to be pushed from the storage chamber.

Document WO 2007/037865 A2 discloses a cloth bonding apparatus comprising a storage chamber that is adapted to store an adhesive therein and that includes a container that has an opening at a top and cover portion that covers the opening of the container. The cloth bonding apparatus further comprises a channel that is adapted to supply adhesive stored in the storage chamber to a nozzle.

Document US 2003/010439 A1 discloses an apparatus for sealing of protective barrier fabric seams in otherwise impermeable articles such as garments, footwear, surgical gowns and the like. In one pass through the apparatus, a sealed seam in a protective barrier fabric joint, using a curable adhesive sealant, is provided along a predetermined and specified length of the joint. Also provided are mixing dies for use, inter alia, in the process which are especially suited for applying the two-part adhesive sealant. In addition, variable-residence-time curing apparatus, which effects variable, controlled, desired cures of the adhesive, all in a one-pass operation, is provided, together with precise metering pumps, especially suited for supplying the seam sealing adhesive in the process of the disclosure.

Document US 3,295,493 A discloses an automatic apparatus for filling with an adhesive the seams and stitching perforations, which are produced during the sewing of two pieces of a synthetic resin film together by an industrial sewing machine. Two pieces of a film are sewed up together so that two rows of stitches are made. A pipe is inserted between the two pieces and between the two rows. An adhesive is applied there through the pipe which is drawn out gradually. Corresponding to the drawing out of the pieces so that the two pieces are bound together and the two rows of stitches are filled with the adhesive flow out of the pipe whereby an article which is water-proof along the seam may be obtained.

Document US 2,664,938 discloses an apparatus for bonding or sealing pieces of plastic together, especially sheets of vinyl resin. The machine of this document includes a pair of rollers adapted to press together the overlapped portion of plastic sheets and to draw the sheets through the machine. Mounted in front of the rollers is a guide element adapted to guide the sheets into overlapping relation, in which element is mounted a nozzle to feed a bond-effecting liquid between the overlapped portions of the sheet as they emerge from the guide element. The bond-effect liquid is fed to the nozzle through a suitable delivery system to which is connected a pressure device operable upon starting of the machine to create a pressure pulse to positively initiate flow of the bond-effecting liquid.

Document WO 01/89812 A1 discloses a device for assembling textile materials comprising an applicator with at least one opening. Said opening enables a liquid assembly medium to be at least partially applied between two or more essentially flat lengths of textile material which at least partially overlap each other. The device is characterized in that the applicator is designed to bring said opening into the vicinity of a surface of the textile material, without making a hole in said textile material.

Document US 2,142,733 A discloses a mechanism for applying cement or other adhesive along a strip simultaneously with the stitching of the strip close beside the line of its stitching. A particular example is an applying of cement to a tape which is to be turned over an edge of shoe upper material and stuck to the adjoining back surface to bind and finish that edge, with what is known as "French cord". Disclosed is a combination of appliances with a tape guide and a pressure wheel. According to the disclosure, a roller may be mounted on a shaft or stud whose end portion will support the pressure wheel close to the plain in which the needle reciprocates.

Document WO 2006/132428 A1 discloses a liquid substance supplying device for supplying a liquid substance reserved in a vertical elongated container as a configuration in which a bottom part of a container holder for holding the container inserted through an insertion hole provided on a top side of a holder main body is pivoted on a base bracket with a hinge portion to support the container holder such that it can assume either upright attitude or tilted attitude and in which the container holder is fixed in the upright attitude by a holder fixing mechanism.

Document US 2,317,446 A discloses a veneer joining machine. This machine is for glue connecting a longitudinal edge of veneers without the necessity of using any covering tape over the joint, although provision is made in said machine for joining veneers together with tape connecting means, should the use thereof be desired. This machine contains a storage chamber that is adapted to store an adhesive therein and that includes a container a covering portion. A channel is adapted to supply adhesive storage in the storage chamber to a nozzle.

Document CH 655 894 A5 discloses a transporting device, consisting of a lower conveyer belt, an upper conveyer belt and drums. The edges of two subsequent plates are moved to a gluing line for abating each other. The control of this process is made by a positioning control comprising photo cells. Subsequently, the gluing device having nozzles is pressed to the gluing line of both plates and adhesive is in use.

### SUMMARY

The above-described apparatus cannot apply the desired pressure into the storage chamber when the inside of the storage chamber is not tightly sealed. The apparatus cannot push an appropriate amount of the viscous fluid from the storage chamber when a cover of the storage chamber is open. Thus, the apparatus cannot discharge an appropriate amount of the viscous fluid from the nozzle. When the worker operates without knowing that the cover of the storage chamber is open, the apparatus cannot apply an appropriate amount of the viscous fluid onto the adherend and consequently the worker fails to operate.

It is an object of the present invention to provide a cloth bonding apparatus capable of discharging an appropriate amount of adhesive from a nozzle to perform cloth bonding.

According to a first aspect of the present invention, a cloth bonding apparatus comprises a storage chamber that is adapted to store an adhesive therein and that includes, a container that has an opening at a top, and a cover portion that covers the opening of the container, a detecting portion that detects whether the cover portion is open or not, a channel that is adapted to supply the adhesive stored in the storage chamber to a nozzle, a valve operating portion that is adapted to open and close a valve provided on a cartridge when the cartridge filled with the adhesive is housed in the container of the storage chamber, and a driving portion that drives the valve operating portion, wherein the driving portion drives the valve operating portion to open the valve and passes the adhesive through the channel when the detecting portion detects that the cover portion is not open. In the cloth bonding apparatus, when it is detected that the cover portion of the storage chamber is not open, the driving portion drives the valve operating portion to open the valve, thereby passing the adhesive through the channel. The adhesive flows through the channel and is discharged from the nozzle. Thus, the worker can perform the bonding in a state where the storage chamber is sealed. The cloth bonding apparatus can pass an appropriate amount of the adhesive through the channel and discharge the adhesive from the nozzle.

In the cloth bonding apparatus, the driving portion may drive the valve operating portion to close the valve and may prohibit the adhesive from passing through the channel when the detecting portion detects that the cover portion is open. In this case, when the worker opens the cover portion of the storage chamber, the cloth bonding apparatus does not discharge the adhesive from the nozzle. The cloth bonding apparatus does not perform the bonding operation in a state where the cover portion of the storage chamber is open. Also when the worker opens the cover portion for replacing the cartridge and takes out the cartridge, the cloth bonding apparatus can prevent the adhesive from leaking into the storage chamber.

The cloth bonding apparatus may further comprise a gas supply portion that is adapted to supply a gas into the storage chamber to push the adhesive inside the storage chamber to a downstream side of the channel. In this case, the gas supply portion can efficiently push the adhesive inside the cartridge toward a downstream side of the channel.

In the cloth bonding apparatus, the detecting portion may be a sensor that detects a gas pressure inside the storage chamber. In this case, when the gas pressure inside the storage chamber is high, the cloth bonding apparatus can determine that the cover portion is not open. When the gas pressure inside the storage chamber is low, the cloth bonding apparatus can determine that the cover portion is open.

In the cloth bonding apparatus, the storage chamber may comprise a key portion that prohibits the cover portion from being open and that may include, a hole that is provided in the container or the cover portion, and a protrusion that is provided in the container or the cover portion that does not include the hole, and the protrusion may be fitted into the hole to prohibit the cover portion from being open. In this case, a moving portion moves at least one of the hole and the protrusion so that the cloth bonding apparatus may prohibit the cover portion from being open. The moving portion moves at least one of the hole and the protrusion so that the cloth bonding apparatus may permit the cover portion to be open.

The cloth bonding apparatus may further comprise a moving portion that moves at least one of the hole and the protrusion, and a movement controlling portion that controls the moving portion based on a detection result of the detecting portion to move at least one of the hole and the protrusion, and may switch a state in which the cover portion is openable where the protrusion is not fitted into the hole and a state in which the cover portion is not openable where the protrusion is fitted into the hole.
In this case, when the valve is open to pass the adhesive through the channel, the cloth bonding apparatus can switch the cover portion to the non-openable state. Since the cloth bonding apparatus can switch the cover portion to the non-openable state while the adhesive is being discharged, an appropriate amount of the adhesive can be always discharged.

The moving portion of the cloth bonding apparatus may be an air cylinder. The air cylinder can prohibit the cover portion from being open.

### BRIEF DESCRIPTION OF THE DRAWINGS

Fig. 1 is an upper front perspective view of a cloth bonding apparatus 1;
Fig. 2 is an upper front perspective view of a bonding machine 2;
Fig. 3 is a front view of the bonding machine 2;
Fig. 4 is a left side view of the bonding machine 2;
Fig. 5 is an upper front perspective view of an inner configuration of the bonding machine 2;
Fig. 6 is a cross sectional view taken along line I-I of Fig. 2;
Fig. 7 is a cross sectional view taken along line I-I of Fig. 2;
Fig. 8 is a cross sectional view taken along line II-II of Fig. 2;
Fig. 9 is a cross sectional view taken along line III-III of Fig. 2;
Fig. 10 is a partially enlarged perspective view of the vicinity of a nozzle 17 during a bonding operation;
Fig. 11 is a block diagram showing an electric configuration of the cloth bonding apparatus 1; and
Fig. 12 is a flow chart showing a cover portion control processing.

### DETAILED DESCRIPTION OF THE EMBODIMENTS

A cloth bonding apparatus 1 according to an embodiment of the present invention will be described below with reference to the drawings.

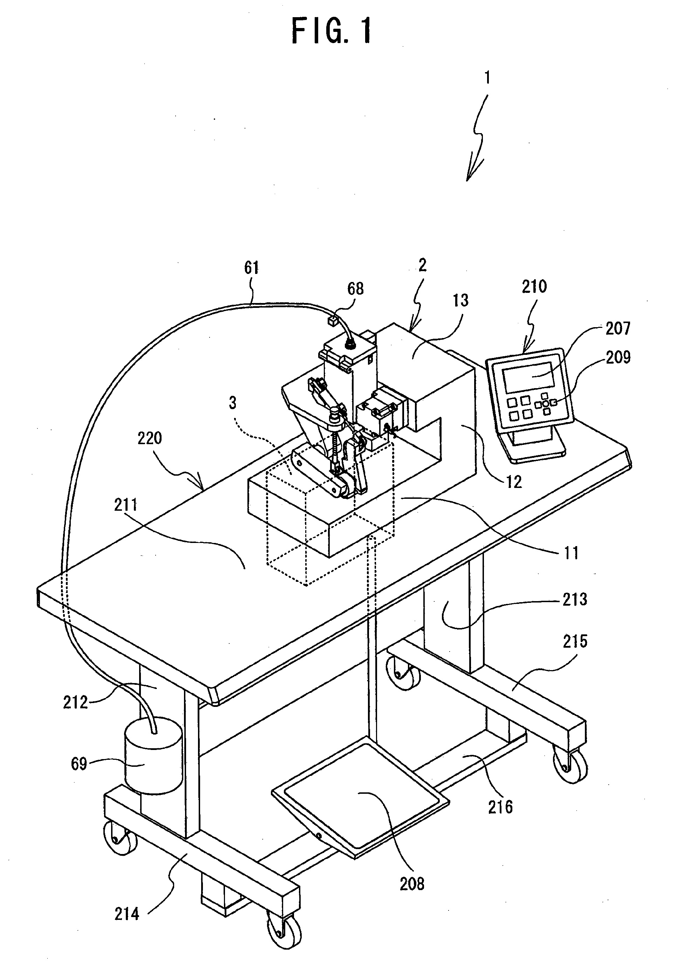

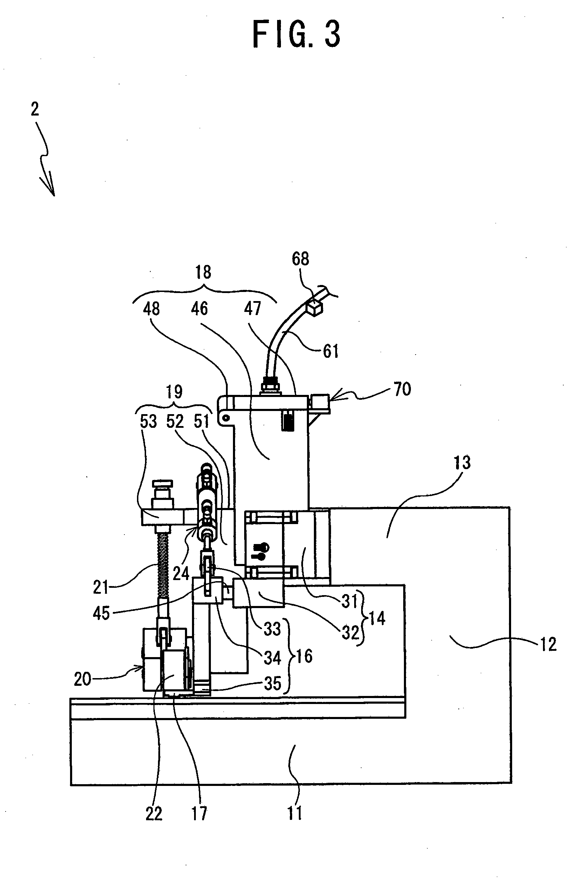

A configuration of the cloth bonding apparatus 1 will be described with reference to Figs. 1 to 4. In the following description, it is defined that the upper side, the lower side, the right side, the left side, the front face side, and the back face side of Fig. 3 are the upper side, the lower side, the right side, the left side, the front side, and the back side of a bonding machine 2, respectively.

An overall configuration of the cloth bonding apparatus 1 will be described with reference to Fig. 1. As shown in Fig. 1, the cloth bonding apparatus 1 includes a bonding machine 2 and a table 220. The bonding machine 2 is fixed to the table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The table 220 includes a top board 211, left and right leg portions 212, 213, left and right support portions 214, 215, and a foot holder 216. The bonding machine 2 is fixed on the top board 211. The top board 211 has a rectangular plate shape in a plan view, with the right-and-left direction as its longitudinal direction. The length of the top board 211 in the right-and-left direction is about triple the length of the bonding machine 2 in the right-and-left direction. The length of the top board 211 in the back-and-forth direction is about twice the length of the bonding machine 2 in the back-and-forth direction.

The top board 211 has an operation panel 210 on the right side of a position where the bonding machine 2 is fixed. The operation panel 210 includes a liquid crystal display (LCD) portion 207 and a plurality of keys 209. The LCD portion 207 displays various items of information thereon. The keys 209 are directed for inputting various items of information. A worker may set various operations of the cloth bonding apparatus 1 by operating the keys 209 while looking at the LCD portion 207.

The left leg portion 212 having a plate shape extends vertically downwards from the left end of the top board 211, perpendicular to the upper face of the top board 211. The right leg portion 213 having a plate shape extends vertically downwards from the right end of the top board 211, perpendicular to the upper face of the top board 211. The left support portion 214 is connected to the lower end of the left leg portion 212. The right support portion 215 is connected to the lower end of the right leg portion 213. The left support portion 214 and the right support portion 215 each are substantially prismatic members with the back-and-forth direction as a longitudinal direction.

A compressor 69 is provided on the left side of the left leg portion 212. The compressor 69 has a substantially cylindrical shape with the vertical direction as the longitudinal direction.

The foot holder 216 having an elongated plate shape connects the left support portion 214 and the right support portion 215 substantially at the centers thereof in the back-and-forth direction. A pedal 208 is provided substantially at the center of the foot holder 216 in the right-and-left direction. The worker may use the pedal 208 to adjust a feed speed of the cloths.

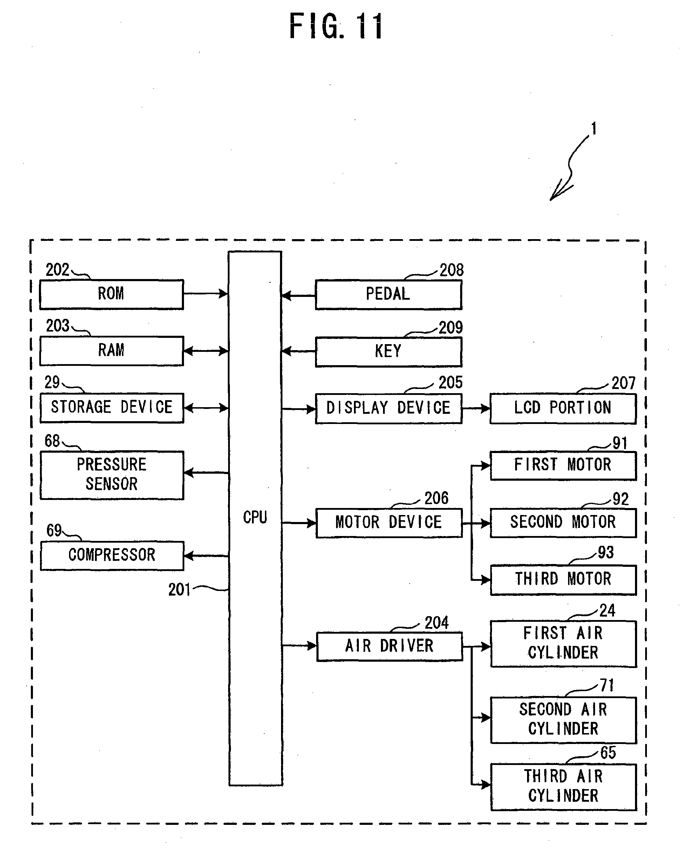

A control box 3 is fixed at the lower face of the top board 211. The control box 3 stores a control substrate having a CPU 201 (see Fig. 11) and the like mounted thereon. The control box 3 is electrically connected to the bonding machine 2, the operation panel 210, and the pedal 208.

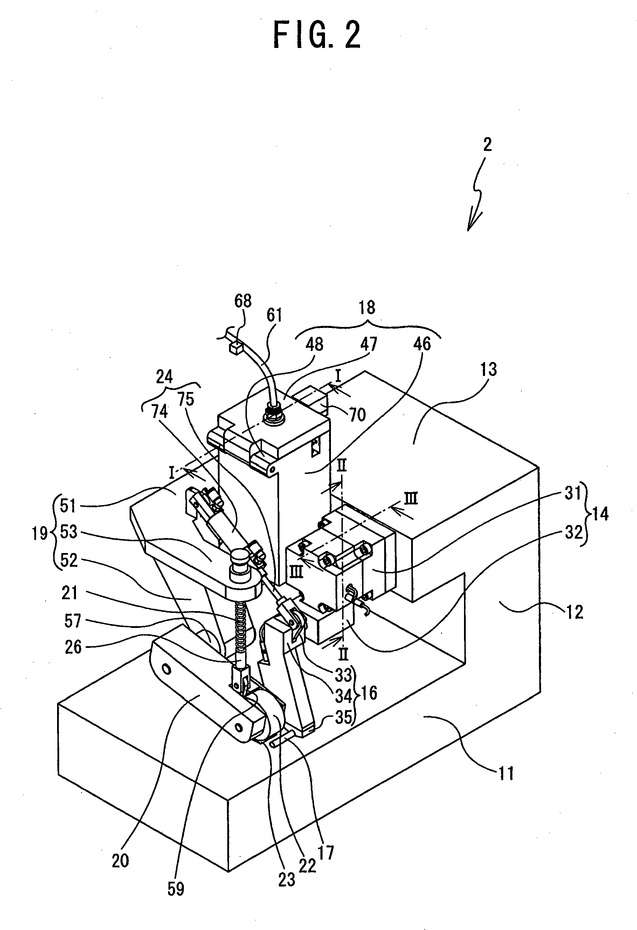

The configuration of the bonding machine 2 will be described with reference to Figs. 2 to 4. As shown in Figs. 2 and 3, the bonding machine 2 includes a bed portion 11, a pillar portion 12, and an arm portion 13. The bed portion 11 has a substantially rectangular parallelepiped shape with the right-and-left direction as the longitudinal direction. The bed portion 11 is fixed on the top board 211 (see Fig. 1). The pillar portion 12 extends vertically upwards from the right end of the bed portion 11. The arm portion 13 is connected to the upper end of the pillar portion 12 and extends leftward from the left side of the pillar portion 12. The length of the arm portion 13 in the right-and-left direction is about one third of the length of the bed portion 11 in the right-and-left direction.

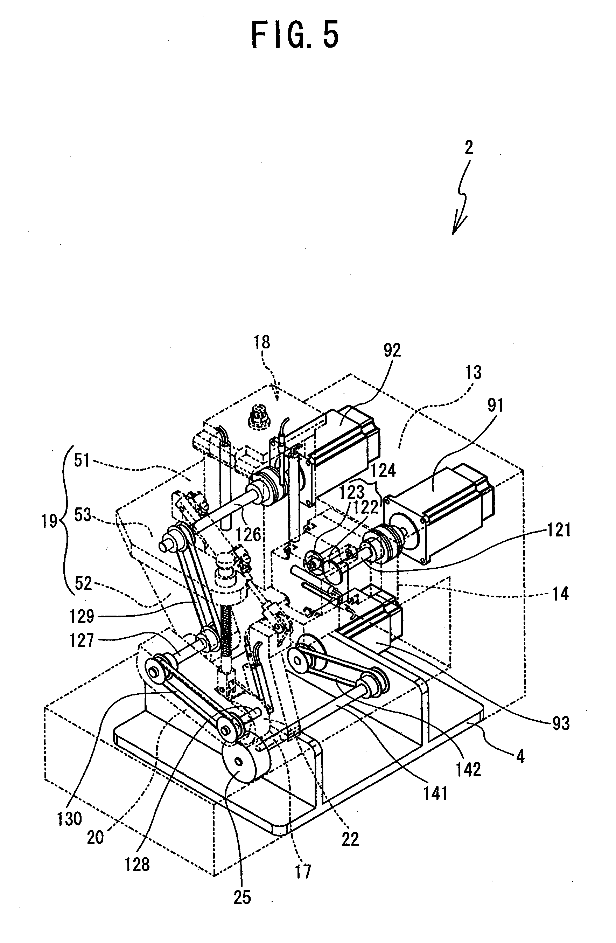

The bed portion 11 includes therein a lower feed roller 25 (see Fig. 5), a third motor 93 (see Fig. 5) and the like. The lower feed roller 25 presses and feeds cloths in conjunction with an upper feed roller 22, which will be described later. The third motor 93 drives the lower feed roller 25. The bed portion 11 functions as a base that supports the pillar portion 12. The pillar portion 12 supports the arm portion 13. As shown in Fig. 2, the left end of the arm portion 13 supports a pump casing 14, a storage chamber 18, and a beam portion 19, from front to back in this order. The arm portion 13 includes therein a first motor 91 (see Fig. 5), a second motor 92 (see Fig. 5) and the like. The first motor 91 drives a gear pump 124 (see Fig. 5). The second motor 92 drives the upper feed roller 22.

The pump casing 14 will be described. As shown in Figs. 2 and 3, the pump casing 14 includes a first pump casing 31 and a second pump casing 32. The first pump casing 31 is a substantially cubic member. The first pump casing 31 is fixed on the left side face of the arm portion 13. The first pump casing 31 includes therein the gear pump 124 (see Fig. 5) and the like. The gear pump 124 supplies an appropriate amount of adhesive to a nozzle 17 with high accuracy. The second pump casing 32 is a substantially rectangular parallelepiped member. The second pump casing 32 extends downward from the left end portion of the lower face of the first pump casing 31. As shown in Fig. 3, the length of the first pump casing 31 in the vertical direction is substantially the same as the length of the arm portion 13 in the vertical direction. The position of the second pump casing 32 in the right-and-left direction is substantially the same as the center position of the bed portion 11 in the right-and-left direction.

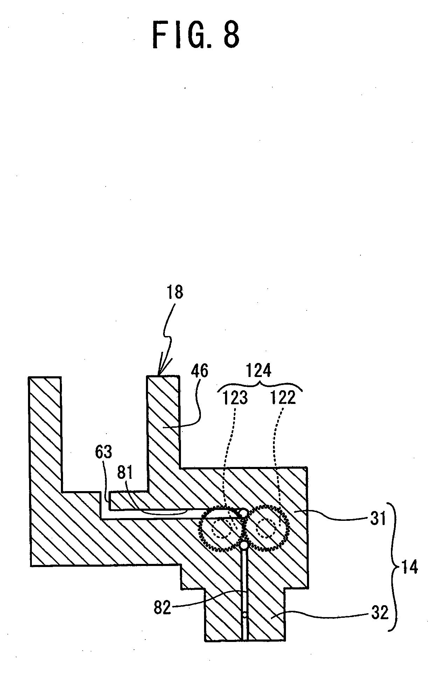

The second pump casing 32 includes a shaft portion 45 (refer to Fig. 3) on its left side. The shaft portion 45 is connected to the right side of an upper end portion 34 of a support portion 16 and swingably supports the support portion 16 about the shaft portion 45.The pump casing 14 includes a channel 81 (refer to Fig. 8) and a channel 82 (refer to Fig. 8), which will be described later. The channel 81 leads the adhesive from the storage chamber 18 to the gear pump 124. The channel 82 leads the adhesive from the gear pump 124 to the support portion 16.

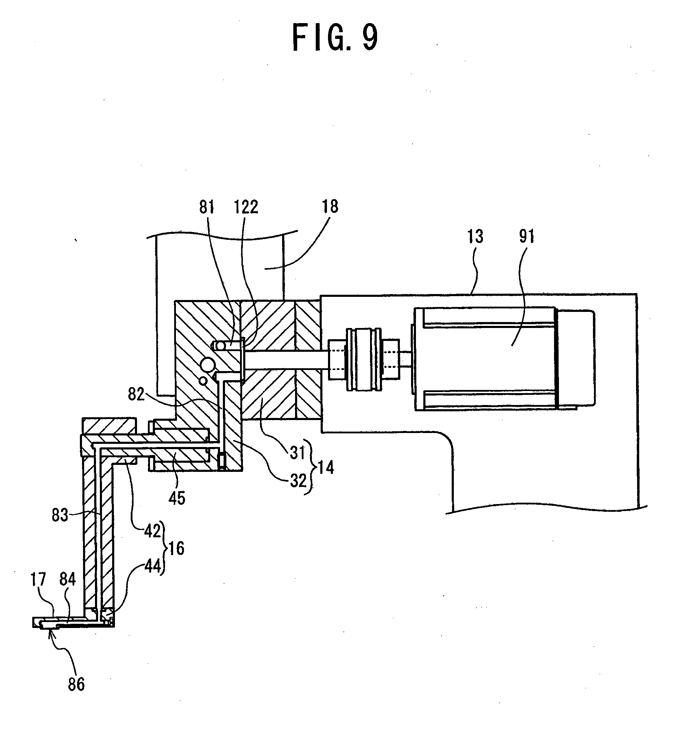

As shown in Figs. 2 and 3, the shape of the support portion 16 is substantially rectangular parallelepiped with the vertical direction as the longitudinal direction. A small gap is present between the lower end portion 35 of the support portion 16 and the bed portion 11. The support portion 16 includes therein a channel 83 (see Fig. 9). The channel 83 leads the adhesive from the pump casing 14 to the nozzle 17. The support portion 16 includes the nozzle 17 at the lower end portion 35. The nozzle 17 extends leftward from the support portion 16. The support portion 16 includes a drive transmitting portion 33 at the upper end portion 34. The drive transmitting portion 33 supports an end portion of a movable portion 75 of a first air cylinder 24.

The first air cylinder 24 includes air inlet ports. An intake/exhaust hose (not shown) is connected to each of the air inlet ports. The cloth bonding apparatus 1 controls an intake and an exhaust of a compressed air through the air inlet ports. The position of a piston inside a body portion 74 of the first air cylinder 24 moves in accordance with the intake and exhaust control. The movable portion 75 is connected to the piston. Thus, the end portion of the movable portion 75 moves back and forth along with the movement of the piston.

The support portion 16 swings back and forth about the shaft portion 45 along with the back-and-forth movement of the movable portion 75 of the first air cylinder 24. The nozzle 17 moves along with the swing of the support portion 16 to a position where the cloth bonding work is performed (a use position) and to a position where maintenance is performed (a maintenance position).

The nozzle 17 has a cylindrical shape. The nozzle 17 has a discharge port 86 (see Fig. 9) from which the adhesive is discharged at the bottom. When the worker performs the cloth bonding work, the discharge port 86 opposes the bed portion 11. When performing the bonding work, the worker inserts the nozzle 17 between the two layers of oppositely arranged cloths. The gear pump 124 (see Fig.5) supplies the adhesive to the nozzle 17 through the channel 83 provided inside the support portion 16. The nozzle 17 discharges the adhesive from the discharge port 86 onto the cloth. Consequently, the adhesive may be applied on the surface of the lower cloth positioned below the nozzle 17.

As shown in Figs. 2 and 3, the storage chamber 18 has a substantially rectangular parallelepiped shape with the vertical direction as the longitudinal direction. The storage chamber 18 extends upward from the left side of the arm portion 13 and from the back of the pump casing 14. The storage chamber 18 includes a body portion 46, a cover portion 47, a shaft portion 48, and a lock portion 70. The shape of the body portion 46 has a bottomed tube shape having an opening at the top. The cover portion 47 covers the opening at the top of the body portion 46. The storage chamber 18 stores a hot-melt adhesive (not shown) inside the body portion 46. The stored adhesive may be supplied from the storage chamber 18 to the gear pump 124 and to the nozzle 17 as needed. The hot-melted adhesive melts when heated to a predetermined temperature, and solidifies at a temperature below the predetermined temperature.

A hose 61 is connected at one end to the cover portion 47. The compressor 69 is provided at the other end of the hose 61. The compressor 69 feeds a gas into the storage chamber 18 via a through hole inside the hose 61. The compressor 69 can supply a gas pressure into the storage chamber 18 via the hose 61. A pressure sensor 68 is provided on the hose 61 and in the vicinity of the portion connected to the cover portion 47. The pressure sensor 68 can detect the gas pressure inside the hose 61.
Thus, the pressure sensor 68 can detect the gas pressure inside the storage chamber 18.

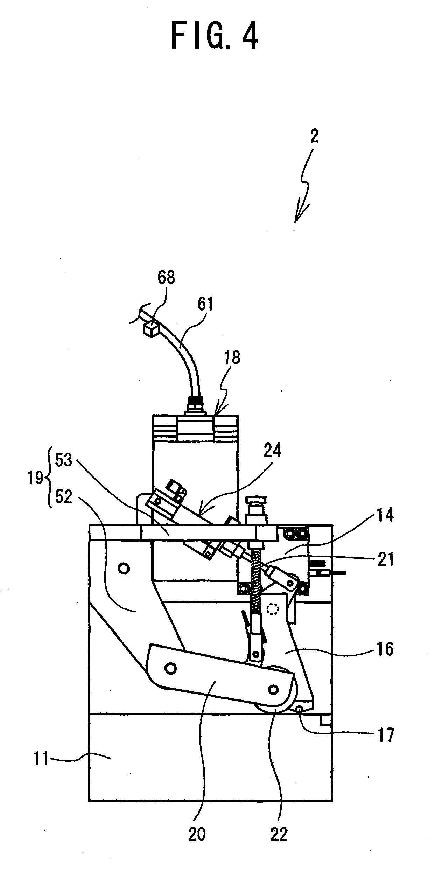

As shown in Fig. 2, the beam portion 19 includes a body portion 51, a spring support portion 53, and a column portion 52. The body portion 51 is a member extending horizontally leftward from the rear left end of the arm portion 13. The length of the body portion 51 in the right-and-left direction is about one third of the length of the bed portion 11 in the right-and-left direction. The spring support portion 53 has a plate shape and extends horizontally forward from the left end portion of the body portion 51. The length of the spring support portion 53 in the back-and-forth direction is about half the length of the bed portion 11 in the back-and-forth direction. As shown in Figs. 2 and 4, the column portion 52 extends obliquely downward from the body portion 51 at about 45 degrees relative to the horizontal plane. There is a gap between the lower end of the column portion 52 and the bed portion 11.

As shown in Fig. 2, the spring support portion 53 has a hole at the front end portion. The spring support portion 53 supports a shaft portion 26 in a vertically movable manner. The shaft portion 26 is inserted through a spring 21. The upper end part of the shaft portion 26 is inserted into the hole of the spring support portion 53. The column portion 52 has a shaft portion 57 extending horizontally leftward from the lower end part thereof. The shaft portion 57 supports a rear end portion of a roller holding portion 20. The roller holding portion 20 may swing a front end portion in the vertical direction with the shaft portion 57 as the center of swing. The body portion 51 is provided with the first air cylinder 24 at the right side of the spring support portion 53. The first air cylinder 24 is directed for switching the position of the support portion 16.

The roller holding portion 20 will be described. The front end portion of the roller holding portion 20 rotatably supports the upper feed roller 22 having a cylindrical shape. The upper feed roller 22 is positioned in the vicinity of the back of the nozzle 17 that extends from the support portion 16. The roller holding portion 20 includes a shaft support portion 59 on the upper face at a slightly forward position from the center. The shaft support portion 59 supports the lower end of the shaft portion 26 inserted through the spring 21. The spring 21 is interposed between the spring support portion 53 and the lower end of the shaft portion 26. The spring 21 urges the shaft portion 26 downwards, thereby urging the roller holding portion 20 connected to the shaft portion 26 downwards.

As shown in Fig. 2, the bed portion 11 is provided with a hole 23 below the upper feed roller 22. A part of the lower feed roller 25 (see Fig. 5) slightly projects upwards from the hole 23. The lower feed roller 25 rotates along with the upper feed roller 22. The lower feed roller 25 and the upper feed roller 22 feed the cloths sandwiched therebetween from front to back.

The inner configuration of the bonding machine 2 will be described below with reference to Fig. 5. As shown in Fig. 5, the bonding machine 2 includes therein the first motor 91, the second motor 92, the third motor 93, and the like.

The first motor 91 transmits a rotation drive force to the gear pump 124 via a rotary shaft 121 thereby driving the gear pump 124. The gear pump 124 includes a drive gear 122 and a driven gear 123. The drive gear 122 is fixed at the left end of the rotary shaft 121. Accordingly, the drive gear 122 rotates along with the rotary shaft 121. The driven gear 123 meshes with the drive gear 122. The first motor 91 is positioned inside the arm portion 13 and to the right side of the portion where the pump casing 14 is connected to the arm portion 13. The rotary shaft 121 extends inside the pump casing 14 leftward from the rotary shaft of the first motor 91. The drive gear 122 and the driven gear 123 supply an appropriate amount of the adhesive to the nozzle 17.

The second motor 92 transmits a rotation drive force to the upper feed roller 22 via the rotary shafts 126, 127, 128 and belts 129, 130 thereby driving the upper feed roller 22. The second motor 92 is positioned inside the arm portion 13 and to the right side of the portion where the beam portion 19 is connected with the arm portion 13. The rotary shaft 126 extends leftward from the rotary shaft of the second motor 92 and extends through the body portion 51. The left end of the rotary shaft 126 is positioned inside the column portion 52. The left end of the rotary shaft 126 supports a pulley. The right end of the rotary shaft 127 is positioned inside the lower end of the column portion 52 and the left end of the rotary shaft 127 is positioned inside the rear end portion of the roller holding portion 20. The right end and left end of the rotary shaft 127 each support a pulley. The rotary shaft 128 is a rotary shaft of the upper feed roller 22. The left end of the rotary shaft 128 is positioned inside the front end portion of the roller holding portion 20 and supports a pulley. The right end of the rotary shaft 128 projects from the front end portion of the roller holding portion 20 and supports the upper feed roller 22. The belt 129 is crossed between the pulley at the left end of the rotary shaft 126 and the pulley at the right end of the rotary shaft 127 inside the column portion 52. The belt 130 is crossed between the pulley at the left end of the rotary shaft 127 and the pulley at the left end of the rotary shaft 128 inside the roller holding portion 20. The upper feed roller 22 rotates along with the rotation of the second motor 92.

The third motor 93 transmits a rotation drive force to the lower feed roller 25 via a rotary shaft 141 and a belt 142 thereby driving the lower feed roller 25. The lower feed roller 25 is cylindrical and is fixed to the rotary shaft 141. The lower feed roller 25 is positioned below the upper feed roller 22 and inside the bed portion 11. The bed portion 11 has a support bed 4 therein. The support bed 4 rotatably supports the rotary shaft 141. The belt 142 is crossed between a pulley of a rotary shaft of the third motor 93 and a pulley at the right end of the rotary shaft 141 inside the bed portion 11. The lower feed roller 25 rotates along with the rotation of the third motor 93.

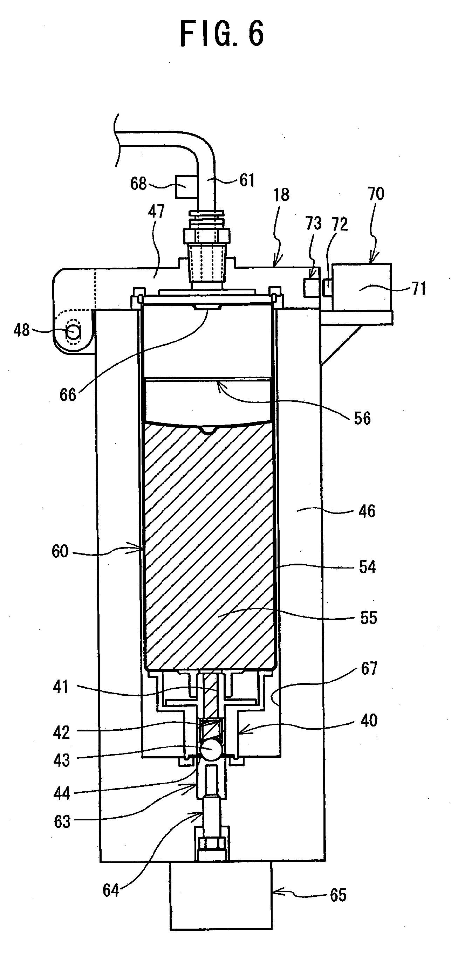

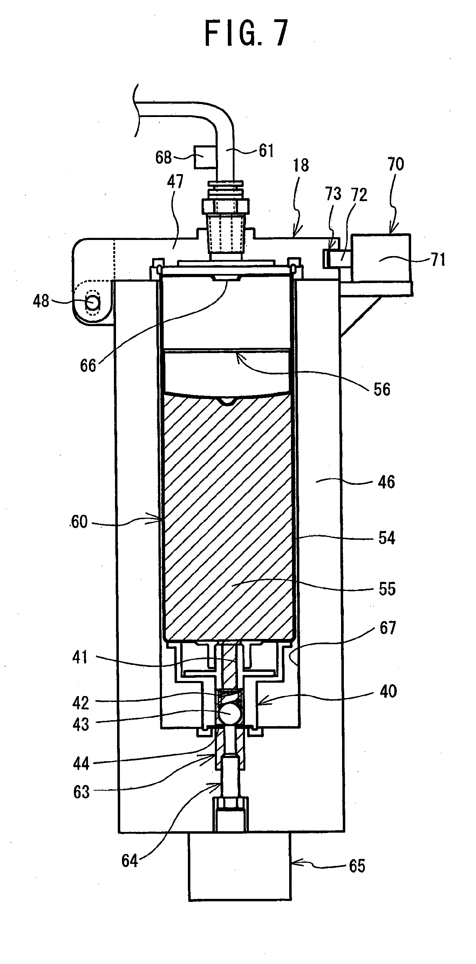

The storage chamber 18 will be described with reference to Figs. 6 and 7. The body portion 46 includes a bottom wall and a peripheral wall. A hole 67 is provided inside the body portion 46. The hole 67 has a substantially cylindrical shape with the vertical direction as the longitudinal direction. The cloth bonding apparatus 1 houses a cartridge 60, in which an adhesive is filled, into the hole 67.
The cover portion 47 covers the upper opening of the hole 67. The shaft portion 48 provided at the upper end of the body portion 46 on its left side supports the cover portion 47 in an openable/closable manner. The cover portion 47 moves to a state in which the upper opening is covered (a state in which the cover portion 47 is closed) and a state in which the upper opening is not covered (a state in which the cover portion 47 is open) around the shaft portion 48. The inside of the hole 67 is tightly sealed when the cover portion 47 is closed.

The lock portion 70 is provided at the upper end of the body portion 46 on its right side. The lock portion 70 includes a second air cylinder 71. The position of a piston inside the second air cylinder 71 moves in accordance with an intake and an exhaust of a compressed air through the air inlet port (not shown). A movable portion 72 is connected to the piston. When the piston moves, the tip end of the movable portion 72 moves in the right-and-left direction. The movable portion 72 projects leftward from the second air cylinder 71 when moving in the left direction. The movable portion 72 enters the inside of the second air cylinder 71 when moving in the right direction.

The cover portion 47 includes a key hole 73 at its right side end surface. The diameter of the key hole 73 is slightly larger than the diameter of the movable portion 72. As shown in Fig. 7, the movable portion 72 is fitted into the key hole 73 while being moved in the left direction. The cover portion 47 is not openable in a state in which the movable portion 72 is fitted into the key hole 73. As shown in Fig. 6, the movable portion 72 goes through the key hole 73 while being moved in the right direction. The cover portion 47 is openable while the movable portion 72 is out of the key hole 73. Thus, the piston of the second air cylinder 71 moves so that the cloth bonding apparatus 1 can switch the cover portion 47 between an openable state (refer to Fig. 6) and a non-openable state (refer to Fig. 7).

A third air cylinder 65 is provided below the body portion 46. The position of a piston inside the third air cylinder 65 moves in accordance with an intake and an exhaust of a compressed air through the air inlet port (not shown). A pressing portion 64 is connected to the piston. The upper end of the pressing portion 64 moves in the vertical direction along with the movement of the piston. A hole 63 is provided at the center of the bottom of the hole 67. The upper part of the pressing portion 64 projects upward from the bottom of the hole 63. The channel 81 (refer to Fig. 8) that leads the adhesive to the pump casing 14 is connected to the hole 63.

As shown in Fig. 6, the upper end of the pressing portion 64 is below the bottom surface of the hole 67 when the pressing portion 64 moves downward. As shown in Fig. 7, the upper end of the pressing portion 64 slightly projects upward from the bottom surface of the hole 67 when the pressing portion 64 moves upward.

The cartridge 60 will be described. The cartridge 60 includes a body portion 54 and a valve 40. The body portion 54 has a substantially cylindrical shape. The valve 40 is provided below the body portion 54. The cartridge 60 is housed in the hole 67 with the vertical direction as the longitudinal direction such that the valve 40 is positioned on its lower side. The diameter of the cylinder of the body portion 54 is substantially the same as the diameter of the hole 67. The body portion 54 is filled with an adhesive 55 therein. The lower surface of the valve 40 contacts the bottom surface of the hole 67.

An inner cover 56 is provided inside the body portion 54. The inner cover 56 can move downward inside the body portion 54 and is in the vicinity of the upper end of the adhesive 55. The inner cover 56 can apply a pressure downward onto the adhesive 55. The worker makes a hole 66 on the upper wall of the body portion 54 when starting the cloth bonding operation. The compressor 69 feeds the gas into the body portion 54 via the hose 61. The gas presses the inner cover 56 downward. The inner cover 56 presses the adhesive 55 downward.

A passage 41 is provided in the valve 40. The passage 41 is a through hole that extends inside the valve 40 in the vertical direction. The upper end of the passage 41 is connected to the body portion 54. A hole 44 is provided at the lower end of the valve 40. The diameter of the hole 44 is smaller than the diameter of the passage 41. The lower end of the passage 41 is connected to the hole 44. The hole 44 is positioned above the hole 63 provided at the bottom surface of the hole 67 while the cartridge 60 is housed in the hole 67.

A sphere 43 and a spring 42 that urges the sphere 43 downward are provided inside the passage 41. The diameter of the sphere 43 is slightly smaller than the diameter of the passage 41. The diameter of the sphere 43 is about 1.5 times as large as the diameter of the hole 44. The spring 42 urges the sphere 43 downward. As shown in Fig. 6, the sphere 43 blocks the hole 44 from the inside of the passage 41.

The procedure of pressing the adhesive 55 filled in the cartridge 60 to the outside will be described with reference to Figs. 6 and 7. As shown in Fig. 6, the worker houses the cartridge 60 into the hole 67 of the storage chamber 18. The pressing portion 64 moves downward. The sphere 43 blocks the hole 44 of the valve 40. Thus, the adhesive 55 does not flow out of the cartridge 60 (refer to Fig. 6). The worker makes the hole 66 on the upper wall of the body portion 54 of the cartridge 60. The worker closes the cover portion 47. The compressor 69 feeds the gas into the body portion 46. The gas presses the inner cover 56 inside the cartridge 60 downward. The inner cover 56 presses the adhesive 55 downward.

When the worker steps on and presses down the pedal 208, the pressure sensor 68 detects the gas pressure. When the gas pressure detected by the pressure sensor 68 is equal to or more than a predetermined value, the cover portion 47 may be closed. When the second air cylinder 71 is driven, the movable portion 72 moves leftward and the cover portion 47 enters the non-openable state. When the third air cylinder 65 is driven, the pressing portion 64 moves upward. As shown in Fig. 7, the pressing portion 64, which has moved upward, presses the sphere 43 upward. A gap is created between the hole 44 of the valve 40 and the sphere 43. The adhesive 55 flows downward through the passage 41. The adhesive55 passes through the gap between the hole 44 and the sphere 43 and flows from the inside of the cartridge 60 into the hole 63. The adhesive 55 flows into the channel 81 connected to the hole 63.

The channels of the adhesive will be described with reference to Figs. 8 and 9. As shown in Fig. 8, the channel 81 connected to the hole 63 is a through hole that extends toward the pump casing 14 below of the bottom wall at the pump casing 14 side. The channel 81 is a passage that guides the adhesive flowed out from the cartridge 60 to the gear pump 124.

The channel 81 leads from the storage chamber 18 to the center of the inside of the first pump casing 31 of the pump casing 14. The channel 81 bends to the right at a right angle at the center of the first pump casing 31 (at the rear surface side of Fig. 8) and leads to the upper end of a portion where the drive gear 122 and the driven gear 123 are meshed with each other.

As shown in Fig. 9, the channel 82 is a passage that guides the adhesive passing through the gear pump 124 to the channel 83 of the support portion 16. The channel 82 extends leftward from the lower end of the portion where the drive gear 122 and the driven gear 123 (refer to Fig. 8) are meshed with each other. The channel 82 extending leftward bends downward, bends to the left at its lower end, passes through the shaft portion 45 and then leads to the channel 83 inside the support portion 16.

The channel 83 is a passage that guides the adhesive flowing through the channel 82 to the nozzle 17. The channel 83 extends from the upper end 34 to the lower end 35 inside the support portion 16 and leads to the channel 84 inside the nozzle 17.

The channel 84 is a passage that guides the adhesive flowing through the channel 83 to the discharge port 86. The discharge port 86 is provided below the left end of the nozzle 17. The channel 84 extends from the right end to the left end inside the nozzle 17 and is connected to the discharge port 86. The adhesive is discharged from the discharge port 86 to the outside.

There will be described how the adhesive flows from the storage chamber 18 via the pump casing 14 and the support portion 16 to the discharge port 86 of the nozzle 17 with reference to Figs. 8 and 9. The pressing portion 64 presses the sphere 43 upward and the adhesive flows out of the cartridge 60. The flowed adhesive flows through the channel 81 to the gear pump 124. The first motor 91 drives the drive gear 122 so that the drive gear 122 and the driven gear 123 rotate. The gear pump 124 feeds the liquid adhesive from the channel 81 toward the channel 82. The adhesive flows from the channel 82 toward the channel 83, leads to the channel 84, and is discharged from the discharge port 86 to the outside.

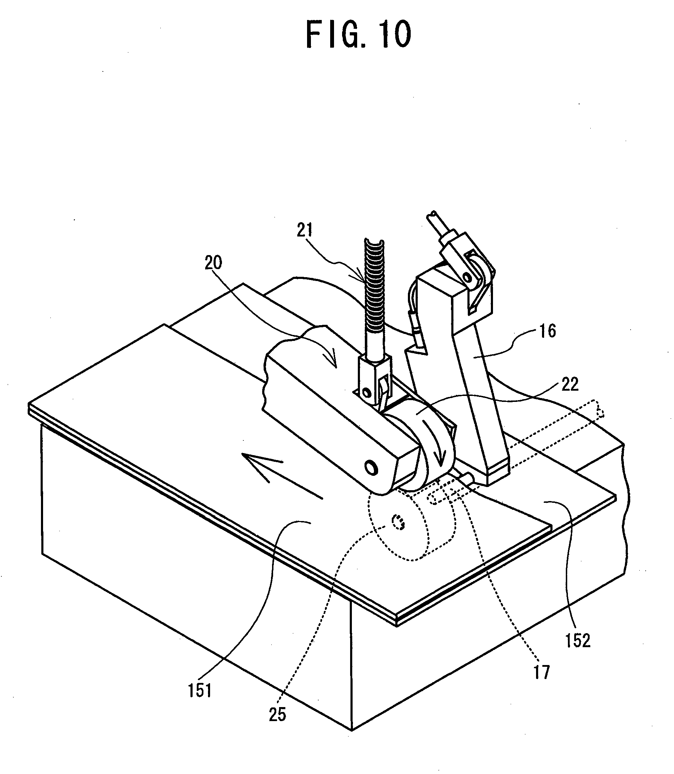

There will be described how the bonding machine 2 operates during the bonding operation of bonding an upper cloth 151 and a lower cloth 152 with reference to Fig. 10. When performing the bonding operation, the bonding machine 2 moves the movable portion 75 (refer to Fig. 2) of the first air cylinder 24 (refer to Fig. 2) ahead and moves the support portion 16 to the use position. The worker places the upper cloth 151 on the lower cloth 152. The worker places the nozzle 17 at a portion where the cloths are to be bonded. The upper feed roller 22 and the lower feed roller 25 sandwich the upper cloth 151 and the lower cloth 152 behind the nozzle 17.

When the worker steps on and presses down the pedal 208, the adhesive flows out from the cartridge 60. The flowed adhesive flows through the channel 81 to the gear pump 124. The gear pump 124 is driven to feed the adhesive to the channels 82 to 84. The adhesive is discharged from the discharge port 86 of the nozzle 17. The adhesive discharged from the discharge port 86 adheres to the lower cloth 152. The upper feed roller 22 and the lower feed roller 25 rotate in which the upper cloth 151 and the lower cloth 152 are fed from front to back. The spring 21 urges the upper feed roller 22 downward. Thus, the upper feed roller 22 and the lower feed roller 25 press and bond the upper cloth 151 and the lower cloth 152 together.

An electrical configuration of the cloth bonding apparatus 1 will be described with reference to Fig. 11. The cloth bonding apparatus 1 includes a CPU 201, a ROM 202, a RAM 203, and a storage device 29. The CPU 201 performs reception processing and control processing. The reception processing is a processing for receiving input information from the key 209, the pedal 208, and the like. The reception processing is also a processing for receiving information detected by the various sensors. The control processing is a processing for controlling the motors and the like. The ROM 202 stores programs to be executed by the CPU 201 and various default parameters and the like. The RAM 203 temporarily stores timers, counters, flags, and the like. The storage device 29 stores various setting information inputted by the worker. The CPU 201 is electrically connected to the ROM 202, the RAM 203, and the storage device 29, respectively. The CPU 201 can access storage areas of the ROM 202, the RAM 203, and the storage device 29.

The pedal 208 is electrically connected with the CPU 201. The worker may use the pedal 208 to adjust the feed speed of the cloths. The CPU 201 recognizes an amount by which the pedal 208 is pressed down. The CPU 201 determines a rotation speed of the upper feed roller 22 and the lower feed roller 25, and rotation speed of the drive gear 122 and the driven gear 123, on the basis of the recognized adjustment amount of the pedal 208.

The keys 209 are electrically connected with the CPU 201. The worker may use the keys 209 to enter various operation settings. The CPU 201 recognizes the press state of the keys 209 operated by the worker. The CPU 201 stores the information on various operation settings in the storage device 29 on the basis of the recognized press status of the key 209.

A display driver 205 is electrically connected with the CPU 201. The LCD portion 207 is electrically connected with the display driver 205. The CPU 201 displays desired information on the LCD portion 207 via the display driver 205.

A motor driver 206 is electrically connected with the CPU 201. The motors 91 to 93 each are electrically connected with the motor driver 206. The CPU 201 controls the motors 91 to 93 via the motor driver 206.

The air driver 204 is electrically connected to the CPU 201. The air driver 204 is electrically connected to the air cylinders 24, 71 and 65. The CPU 201 controls the pressure of the air to be fed into the air inlet ports of the air cylinders 24, 71 and 65 via the air driver 204. The support portion 16 moves to the use position and the maintenance position based on the operation of the first air cylinder 24. The lock portion 70 switches the state of the cover portion 47 between the openable state and the non-openable state based on the operation of the second air cylinder 71. The pressing portion 64 opens and closes the valve 40 based on the operation of the third air cylinder 65.

The pressure sensor 68 is electrically connected to the CPU 201. The CPU 201 can obtain the gas pressure detected by the pressure sensor 68. The compressor 69 is electrically connected to the CPU 201. The CPU 201 can control the operation of the compressor 69.

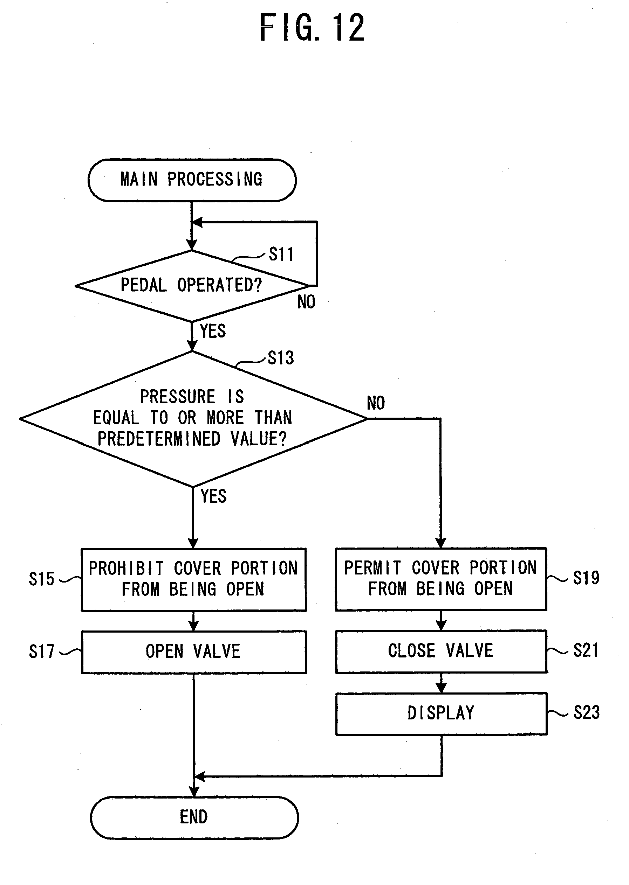

The main processing of the cloth bonding apparatus 1 will be described with reference to Fig. 12. When the worker operates the key 209 to start the cloth bonding operation, the CPU 201 performs the main processing.

The pressing portion 64 has been moved downward in the initial state in which the main processing is not performed. The movable portion 72 has been moved rightward. Thus, the cover portion 47 is in the openable state.

The worker houses the cartridge 60 into the storage chamber 18 before operating the key 209 to start the bonding operation. If no hole is present on the upper wall of the cartridge 60, the worker makes the hole 66 on the upper wall of the cartridge 60. The worker closes the cover portion 47 after housing the cartridge 60 into the storage chamber 18. The compressor 69 feeds the gas into the storage chamber 18.

The main processing is activated in the above state. The CPU 201 determines whether the worker has started the bonding operation by stepping on and pressing down the pedal 208 (S11). When the worker has not performed the above operation (S11: NO), the CPU 201 returns to step S11. The CPU 201 continuously monitors whether the worker steps on and presses down the pedal 208.

When the cpu201 detects that the pedal 208 has been stepped on and pressed down (S11: YES), the CPU 201 obtains the gas pressure inside the storage chamber 18 detected by the pressure sensor 68. When the obtained gas pressure is equal to or more than a predetermined value (S 13: YES), the CPU 201 moves the piston of the second air cylinder 71 and moves the movable portion 72 leftward. The movable portion 72 is fitted into the key hole 73. The cover portion 47 enters the non-openable state (S15). The CPU 201 moves the piston of the third air cylinder 65 and moves the pressing portion 64 upward (S 17). The sphere 43 inside the valve 40 moves upward. A gap is created between the hole 44 and the sphere 43. The gas fed into the storage chamber 18 by the compressor 69 presses the inner cover 56 inside the cartridge 60 downward and the inner cover 56 presses the adhesive downward. The adhesive passes through the gap between the hole 44 and the sphere 43 and flows from the cartridge 60 to the outside. The adhesive passes through the hole 63 and the channel 81 and flows into the gear pump 124.

The gear pump 124 is driven. The gear pump 124 feeds the adhesive from the channel 81 to the channels 82 to 84. The adhesive is discharged from the nozzle 17. The second motor 92 and the third motor 93 rotate so that the upper feed roller 22 and the lower feed roller 25 rotate. When the worker releases the pedal 208, the gear pump 124 stops, and the second motor 92 and the third motor 93 also stop. The worker operates the pedal 208 to bond the upper cloth 151 and the lower cloth 152 along an arbitrary length. The CPU 201 terminates the processing.

When the obtained gas pressure is less than the predetermined value (S13: NO), the CPU 201 moves the piston of the second air cylinder 71 and moves the movable portion 72 rightward. The movable portion 72 is out of the key hole 73. The cover portion 47 enters the openable state (S19). The CPU 201 moves the piston of the third air cylinder 65 and moves the pressing portion 64 downward. The sphere 43 inside the valve 40 moves downward to block the hole 44. The adhesive stops flowing (S21). The CPU 201 displays that an abnormality has occurred on the LCD portion 207 in order to notify the worker of that the bonding operation cannot be performed. The CPU 201 terminates the processing.

As described above, according to the present embodiment, when the cloth bonding apparatus 1 detects that the cover portion 47 is not open, the third air cylinder 65 drives the pressing portion 64 to open the valve 40 and supplies the adhesive from the cartridge 60 to the outside. The cloth bonding apparatus 1 can apply the predetermined gas pressure into the cartridge 60 in a state in which the storage chamber 18 is tightly sealed. Thus, the cloth bonding apparatus 1 can feed an appropriate amount of the adhesive to the gear pump 124 and discharge the adhesive from the nozzle 17.

When the cloth bonding apparatus 1 detects that the cover portion 47 is open, the third air cylinder 65 drives the pressing portion 64 to close the valve 40 and prohibits the adhesive from flowing from the cartridge 60. Thus, the cloth bonding apparatus 1 can prevent the adhesive from flowing out of the cartridge 60 in a state in which the cover portion 47 is open. The cloth bonding apparatus 1 moves the pressing portion 64 downward in a state in which the worker opens the cover portion 47. The pressing portion 64 does not press the sphere 43 upward. Thus, when the worker steps on and presses down the pedal 208 while the cover portion 47 is open, the cloth bonding apparatus 1 can prevent the adhesive from leaking into the storage chamber 18.

The present invention is not limited to the above embodiment but is only limited by the claims and various modifications can be made within the scope of the claims. In the above embodiment, the second air cylinder 71 moves the movable portion 72 so that the cloth bonding apparatus 1 switches the cover portion 47 between the openable state and the non-openable state. For example, a protrusion may be provided on the cover portion 47 and a hole may be provided on the leading end of the movable portion 72 of the second air cylinder 71. In the above case, the second air cylinder 71 may move the movable portion 72 on which include the hole so that the cover portion 47 may be switched between the openable state and the non-openable state.

The pressure sensor 68 of Fig. 1 corresponds to the "detecting portion" according to the present invention. The channels 81, 82 of Fig. 8 and the channels 83, 84 of Fig. 9 correspond to the "channel" according to the present invention. The pressing portion 64 of Fig. 6 corresponds to the "valve operating portion" according to the present invention. The third air cylinder 65 of Fig. 6 corresponds to the "driving portion" according to the present invention. The compressor 69 of Fig. 1 corresponds to the "gas supply mechanism" according to the present invention. The lock portion 70, the key hole 73 and the movable portion 72 of Fig. 6 correspond to the "key portion" according to the present invention, the key hole 73 corresponds to the "hole" according to the present invention, the movable portion 72 corresponds to the "protrusion" according to the present invention, and the second air cylinder 71 corresponds to the "moving portion" and "air cylinder" according to the present invention. The CPU 201 that performs the processings in S 15 and S 19 of Fig. 12 corresponds to the "movement controlling portion" according to the present invention.

Examples in which the cloth bonding apparatus bonds separate pieces of cloths together are given in the above-described embodiment and the modified embodiment. However, the cloth bonding apparatus may bond folded portions of one folded cloth.
In other words, the cloth bonding apparatus may bond two layers of cloth(s).

## Claims

1. A cloth bonding apparatus comprising:
a storage chamber (18) that is adapted to store an adhesive therein and that includes:
a container (46) that has an opening at a top; and
a cover portion (47) that covers the opening of the container, and
a channel (81, 82, 83, 84) that is adapted to supply the adhesive stored in the storage chamber to a nozzle (17);
**characterized in that** the cloth bonding apparatus comprises:
a detecting portion (68) that detects whether the cover portion is open or not;
a valve operating portion (64) that is adapted to open and close a valve (40) provided on a cartridge (60) when the cartridge filled with the adhesive is housed in the container of the storage chamber; and
a driving portion (65) that drives the valve operating portion,
wherein the driving portion drives the valve operating portion to open the valve and passes the adhesive through the channel when the detecting portion detects that the cover portion is not open.

2. The cloth bonding apparatus according to claim 1, wherein the driving portion drives the valve operating portion to close the valve and prohibits the adhesive from passing through the channel when the detecting portion detects that the cover portion is open.

3. The cloth bonding apparatus according to claim 1 or 2, further comprising a gas supply portion (69) that is adapted to supply a gas into the storage chamber to push the adhesive inside the storage chamber to a downstream side of the channel.

4. The cloth bonding apparatus according to any one of claims 1 to 3, wherein the detecting portion is a sensor (68) that detects a gas pressure inside the storage chamber.

5. The cloth bonding apparatus according to any one of claims 1 to 4, wherein:
the storage chamber comprises a key portion (70, 72, 73) that prohibits the cover portion from being open and that includes:
a hole (73) that is provided in the container or the cover portion; and
a protrusion (72) that is provided in the container or the cover portion that does not include the hole, and
the protrusion can be fitted into the hole to prohibit the cover portion from being open.

6. The cloth bonding apparatus according to claim 5, further comprising:
a moving portion (71) that moves at least one of the hole and the protrusion; and
a movement controlling portion (201) that controls the moving portion based on a detection result of the detecting portion to move at least one of the hole and the protrusion, and switches a state in which the cover portion is openable where the protrusion is not fitted into the hole and a state in which the cover portion is not openable where the protrusion is fitted into the hole.

7. The cloth bonding apparatus according to claim 6, wherein the moving portion is an air cylinder (71).

## Patentansprüche

1. Tuchfügegerät mit:
einer Speicherkammer (18), die daran angepasst ist, darin ein Klebemittel zu speichern, und die Folgendes aufweist:
einen Behälter (46), der oben eine Öffnung hat; und
einen Abdeckungsabschnitt (47), der die Öffnung des Behälters abdeckt, und
einen Kanal (81, 82, 83, 84), der daran angepasst ist, das in der Speicherkammer gespeicherte Klebemittel zu einer Düse (17) zuzuführen;
**dadurch gekennzeichnet, dass**
das Tuchfügegerät Folgendes aufweist:
einen Erfassungsabschnitt (68), der erfasst, ob der Abdeckungsabschnitt geöffnet ist oder nicht;
einen Ventilbetriebsabschnitt (64), der daran angepasst ist, ein an einer Kartusche (60) vorgesehenes Ventil (40) zu öffnen und zu schließen, wenn die mit dem Klebemittel gefüllte Kartusche in dem Behälter der Speicherkammer untergebracht ist; und
einen Antriebsabschnitt (65), der den Ventilbetriebsabschnitt antreibt,
wobei der Antriebsabschnitt den Ventilbetriebsabschnitt zum Öffnen des Ventils antreibt und das Klebemittel durch den Kanal leitet, wenn der Erfassungsabschnitt erfasst, dass der Abdeckungsabschnitt nicht geöffnet ist.

2. Tuchfügegerät gemäß Anspruch 1, wobei der Antriebsabschnitt den Ventilbetriebsabschnitt zum Schließen des Ventils antreibt und das Hindurchtreten des Klebemittels durch den Kanal unterbindet, wenn der Erfassungsabschnitt erfasst, dass der Abdeckungsabschnitt geöffnet ist.

3. Tuchfügegerät gemäß Anspruch 1 oder 2, des Weiteren mit einem Gaszuführungsabschnitt (69), der daran angepasst ist, ein Gas in die Speicherkammer zuzuführen, um das Klebemittel im Inneren der Speicherkammer zu einer stromabwärtigen Seite des Kanals zu drücken.

4. Tuchfügegerät gemäß einem der Ansprüche 1 bis 3, wobei der Erfassungsabschnitt ein Sensor (68) ist, der einen Gasdruck im Inneren der Speicherkammer erfasst.

5. Tuchfügegerät gemäß einem der Ansprüche 1 bis 4, wobei:
die Speicherkammer einen Schlüsselabschnitt (70, 72, 73) aufweist, der das Öffnen des Abdeckungsabschnitts unterbindet und Folgendes aufweist:
ein Loch (73), das in dem Behälter oder dem Abdeckungsabschnitt vorgesehen ist; und
einen Vorsprung (72), der in dem Behälter oder jenem Abdeckungsabschnitt vorgesehen ist, der das Loch nicht aufweist, und
wobei der Vorsprung in das Loch eingepasst werden kann, um das Öffnen des Abdeckungsabschnitts zu unterbinden.

6. Tuchfügegerät gemäß Anspruch 5, des Weiteren mit:
einem Bewegungsabschnitt (71), der zumindest das Loch oder den Vorsprung bewegt; und
einem Bewegungssteuerabschnitt (201), der den Bewegungsabschnitt auf der Grundlage eines Erfassungsergebnisses des Erfassungsabschnitts steuert, um zumindest das Loch oder den Vorsprung zu bewegen, und der zu einem Zustand, bei dem der Abdeckungsabschnitt geöffnet werden kann, wenn der Vorsprung nicht in dem Loch eingepasst ist, und einem Zustand schaltet, bei dem der Abdeckungsabschnitt nicht geöffnet werden kann, wenn der Versprung in das Loch eingepasst ist.

7. Tuchfügegerät gemäß Anspruch 6, wobei der Bewegungsabschnitt ein Luftzylinder (71) ist.

## Revendications

1. Dispositif de soudage de tissu comprenant :
une chambre de stockage (18) qui est adaptée de manière à stocker un adhésif à l'intérieur et qui comporte :
un conteneur (46) qui présente une ouverture en partie supérieure ; et
une partie de couvercle (47) qui recouvre l'ouverture du conteneur, et
un canal (81, 82, 83, 84) qui est adapté de manière à délivrer l'adhésif stocké dans la chambre de stockage à un injecteur (17) ;
**caractérisé en ce que** le dispositif de soudage de tissu comprend :
une partie de détection (68) qui détecte le fait que la partie de couvercle est ouverte ou non ;
une partie de commande de vanne (64) qui est adaptée de manière à ouvrir et fermer une vanne (40) agencée sur une cartouche (60) lorsque la cartouche remplie avec l'adhésif est contenue dans le conteneur de la chambre de stockage ; et
une partie d'entraînement (65) qui entraîne la partie de commande de vanne,
dans lequel la partie d'entraînement entraîne la partie de commande de vanne à ouvrir la vanne et fait passer l'adhésif à travers le canal lorsque la partie de détection détecte que la partie de couvercle n'est pas ouverte.

2. Dispositif de soudage de tissu selon la revendication 1, dans lequel la partie d'entraînement entraîne la partie de commande de vanne à fermer la vanne et interdit le passage de l'adhésif à travers le canal lorsque la partie de détection détecte que la partie de couvercle est ouverte.

3. Dispositif de soudage de tissu selon la revendication 1 ou 2, comprenant en outre une partie d'alimentation de gaz (69) qui est adaptée afin de délivrer un gaz dans la chambre de stockage de manière à pousser l'adhésif présent à l'intérieur de la chambre de stockage vers un côté aval du canal.

4. Dispositif de soudage de tissu selon l'une quelconque des revendications 1 à 3, dans lequel la partie de détection est un capteur (68) qui détecte une pression de gaz à l'intérieur de la chambre de stockage.

5. Dispositif de soudage de tissu selon l'une quelconque des revendications 1 à 4, dans lequel :
la chambre de stockage comprend une partie formant verrou (70, 72, 73) qui interdit l'ouverture de la partie de couvercle et qui comporte :
un orifice (73) qui est agencé sur le conteneur ou la partie de couvercle ; et
une saillie (72) qui est agencée sur le conteneur ou la partie de couvercle qui ne comporte pas l'orifice, et
la saillie peut être assemblée dans l'orifice afin d'interdire l'ouverture de la partie de couvercle.

6. Dispositif de soudage de tissu selon la revendication 5, comprenant en outre :
une partie de déplacement (71) qui déplace au moins l'un de l'orifice et de la saillie ; et
une partie de commande de mouvement (201) qui commande la partie de mouvement sur la base d'un résultat de détection de la partie de détection afin de déplacer au moins l'un de l'orifice et de la saillie, et assure une commutation dans un état dans lequel la partie de couvercle peut être ouverte lorsque la saillie n'est pas assemblée dans l'orifice et dans un état dans lequel la partie de couvercle ne peut pas être ouverte lorsque la saillie est assemblée dans l'orifice.

7. Dispositif de soudage de tissu selon la revendication 6, dans lequel la partie de déplacement est un vérin pneumatique (71).
